# EUROPEAN PATENT APPLICATION

(11) **EP 4 366 116 A1**
(43) Date of publication of application: **08.05.2024**
(21) Application number: 22903247.9
(22) Date of filing: 28.11.2022
(51) Int. Cl.: H02J 7/00, H02H 7/18, H02M 1/088

(54) **BATTERY PROTECTION CHIP, BATTERY SYSTEM, AND BATTERY PROTECTION METHOD**

(30) Priority: 07.12.2021 CN 202111483827
(71) Applicant: CRM ICBG (WUXI) CO., LTD., Wuxi, Jiangsu 214135 (CN)
(72) Inventor: QI, Zhengkun, Wuxi, Jiangsu 214135 (CN); LUO, Bingyin, Wuxi, Jiangsu 214135 (CN); YOU, Yong, Wuxi, Jiangsu 214135 (CN)
(74) Representative: Canzler & Bergmeier Patentanwälte Partnerschaft mbB
(86) International application number: PCT/CN2022/134747
(87) International publication number: WO 2023/103825

(57) **Abstract**

A battery protection chip, a battery system, and a battery protection method. The battery protection chip (10) comprises: a discharge voltage limiting detection circuit (11) used for detecting a discharge drive signal output by a battery protection chip of a previous level, identifying the level of the discharge drive signal according to the current flow of a discharge detection signal of a battery protection chip of a current level, and reducing a high-low level conversion window voltage of the discharge drive signal; and a charge voltage limiting detection circuit (12) used for detecting a charge drive signal output by the battery protection chip of the previous level, identifying the level of the charge drive signal according to the current flow of a charge detection signal of the battery protection chip of the current level, and reducing a high-low level conversion window voltage of the charge drive signal. The battery protection chip solves the problems of high costs, difficulty in determining the ratio of voltage division by a resistor, and large power consumption during battery protection by existing cascaded battery protection chips.

## Description

### CROSS-REFERENCE TO RELATED APPLICATION

This application claims the benefit of the priority of Chinese application No. 202111483827.9, filed on December 7, 2021, entitled "Battery Protection Chip, Battery System, and Battery Protection Method", the disclosure of which is incorporated herein by reference in its entirety.

### FIELD OF DISCLOSURE

The present disclosure relates to the technical field of electronic circuit design, in particular to a battery protection chip, battery system, and battery protection method.

### DESCRIPTION OF RELATED ARTS

Lithium batteries are widely used in various electrical devices. During the charging and discharging processes, lithium batteries may have issues such as voltage overcharge or over-discharge, excessively high temperature, and excessive current. Among these issues, excessively high and low voltages can lead to battery damage or shortened lifespan. Therefore, a battery protection chip is required to protect the battery. The voltage of a single lithium battery is around 4V. When the operating voltage of an electronic device is higher than 4V, multiple lithium batteries can be connected in series to increase the voltage (e.g., when the operating voltage of the device is 16V, four lithium batteries can be connected in series to achieve this operating voltage). This series of batteries is called a battery pack. However, due to the potential imbalance between the batteries, it is not only necessary to monitor the total voltage of the battery pack, but also to monitor the voltage of each battery.

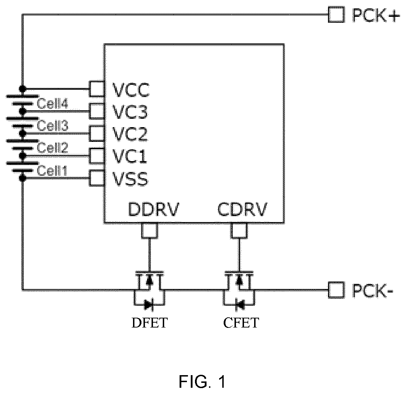

FIG. 1 shows a simplified four-cell protection chip circuit to illustrate the basic working principle of the protection chip. The circuit of the protection chip is designed to protect batteries from overcharging and over-discharging. VCC represents the high potential of power supply, while VSS represents the low potential of power supply. VC1, VC2, VC3, and VCC are monitored battery voltages. The discharge MOSFET, i.e., DFET, and the charge MOSFET, i.e., CFET, are NMOS power transistors. The discharge driver port DDRV and the charge driver port CDRV are connected to the discharge MOSFET DFET and the charge MOSFET CFET, respectively. When the monitored battery voltages are within the range, the circuit will be in normal operation. Specifically, the outputs of the discharge driver port DDRV and the charge driver port CDRV are at a high potential, and the discharge MOSFET DFET and the charge MOSFET CFET conduct; and at this point, if a load (electrical device) is connected between the terminal PCK+ and the terminal PCK-, the batteries will discharge. When any one of the batteries is detected to be over-discharged, which indicates that the voltage is too low, the circuit will enter the low-voltage protection mode. Specifically, the output of the discharge driver port DDRV is at a low potential, the discharge MOSFET DFET is off, and the batteries stop discharging; and at this point, if a charger is connected between the terminal PCK+ and the terminal PCK-, the batteries will charge. When any one of the batteries is detected to be overcharged, which indicates that the voltage is too high, the circuit will enter the high-voltage protection mode. Specifically, the output of the charge driver port CDRV is at a low potential, the charge MOSFET CFET is off, and the batteries stop charging. If the above abnormal conditions occur, the circuit may return to normal operating mode only when the battery returns to the normal voltage range.

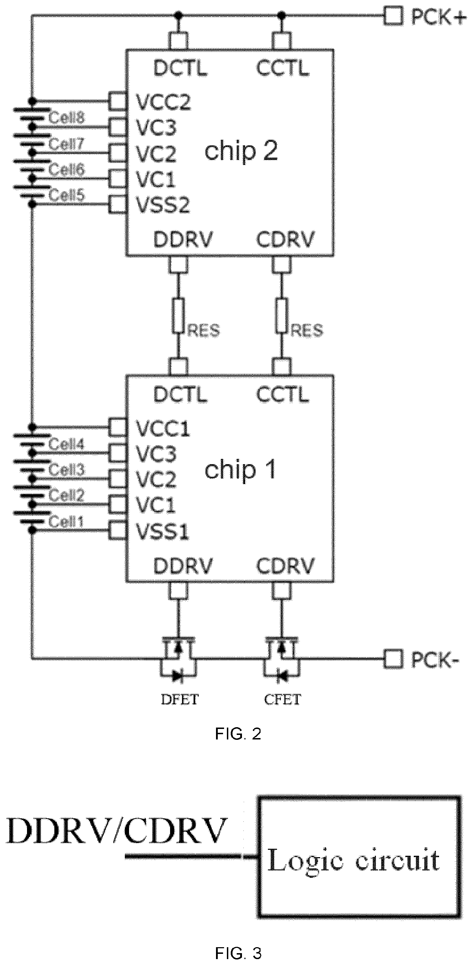

In order to support higher operating voltages, cascaded battery protection chips are required to protect multiple battery packs. FIG. 2 shows a schematic diagram of the existing cascaded battery protection chips for battery protection, in which two battery packs each including four cells are connected in series. A discharge control port DCTL and a charge control port CCTL are added to the chip to realize the cascading, and the related logic is as follows.
(1) If the inputs of the discharge control port DCTL and charge control port CCTL are at a high potential, the working state of the Chip 1 in FIG. 2 is the same as the normal state of the protection chip shown in FIG. 1. Only when the battery pack corresponding to chip 1 suffers overvoltage or undervoltage, the output of the charge driver port CDRV/discharge driver port DDRV will be at a low potential.
(2) If the input of the discharge control port DCTL is at a low potential, then the discharge drive port DDRV will be at a low potential, if the input of the charge control port CCTL is at a low potential, then the charge drive port CDRV will be at a low potential.

According to the above logic, although the chip 2 in FIG. 2 is not directly connected to the gates of the discharge MOSFET DFET and charge MOSFET CFET, if an overvoltage or undervoltage is detected in cells 5-8, the signal to turn off DFET or CFET can still be transmitted through chip 1 to achieve the purpose of protecting the batteries. This is the working principle of the cascaded battery protection chips.

MOSFET is the basic unit of a circuit, and its corresponding manufacturing process varies depending on its function in the circuit. Power MOSFETs need to handle excessive currents and withstand high voltages such as V_{GS} (e.g. 60V) and V_{DS}, which require the use of thick gate oxide. The corresponding manufacturing process is expensive and requires a large area. Logic MOSFETs do not need to handle excessive currents, and only relatively small voltage differences (e.g. 1.2V and 0V) are needed to represent logic "1" and "0", so thin gate oxide can be used. The corresponding manufacturing process is cost-effective and requires a low area. The main problem here is that when chip 2 is used alone, the discharge driver port DDRV and the charge driver port CDRV are connected to the NMOS power transistors in the drive charge/discharge lines, so there is a large voltage difference between the high and low potentials of the outputs of the discharge driver port DDRV and the charge driver port CDRV; when the cascaded protection chips are used, the large voltage difference between the high and low potentials of the discharge driver port DDRV and the charge driver port CDRV of chip 2 has to be output to the logic circuit of chip 1, which can break the thin gate oxygen MOSFETs used in the logic circuit of chip 1.

There are two existing methods to prevent the thin gate oxygen MOSFETs used in chip 1 from being broken.

Scheme 1 directly applies the level signals of the discharge driver port DDRV and the charge driver port CDRV in chip 2 to the corresponding logic circuit in chip 1 without processing, and then adopts thick gate oxygen MOSFETs in the logic circuit of chip 1 (as shown in FIG. 3). The disadvantage of this scheme is the high cost of the thick gate oxygen MOSFETs.

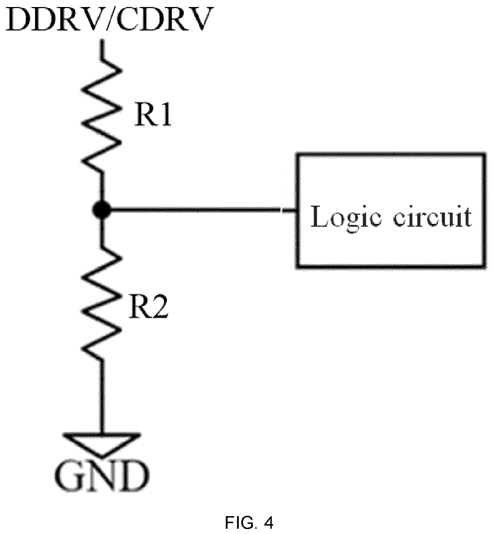

Scheme 2 adds resistors to divide the high input voltage to reduce the potential input to the logic circuit, thus eliminating the need to use the thick gate oxygen MOSFETs in the logic circuit of chip 1 (as shown in FIG. 4). The disadvantages of this scheme are: 1) the number of batteries connected to a power protection chip is not fixed, the battery potential is not fixed, so the output high potential of the discharge driver port DDRV and the charge driver port CDRV is not fixed, thus the voltage distributed across the resistors is difficult to be determined accurately; 2) the additional leakage channels from the discharge driver port DDRV to ground and from the charge driver port CDRV to ground are formed. In addition, considering the limited area of the chip, the resistors cannot be large, so the current is large and the power consumption is high.

### SUMMARY OF THE PRESENT INVENTION

The present disclosure provides a battery protection chip, battery system, and battery protection method for solving the problems of the existing cascaded battery protection chips in performing battery protection including high cost in scheme 1, and not being able to easily determine the voltage division ratio of resistors and high power consumption in scheme 2.

The present disclosure provides a battery protection chip. The battery protection chip at least includes a discharge voltage-limiting-and-detecting circuit and a charge voltage-limiting-and-detecting circuit.

The discharge voltage-limiting-and-detecting circuit is used to detect a discharge drive signal output from a previous battery protection chip, to identify a high or low level of the discharge drive signal output from the previous battery protection chip according to a current flow direction of a discharge detection signal in a current battery protection chip, and to reduce a level translation window voltage of the discharge drive signal output from the previous battery protection chip.

The charge voltage-limiting-and-detecting circuit is used to detect a charge drive signal output from the previous battery protection chip, to identify the high or low level of the charge drive signal output from the previous battery protection chip according to a current flow direction of a charge detection signal in the current battery protection chip, and to reduce the level translation window voltage of the charge drive signal output from the previous battery protection chip.

Optionally, each of the discharge voltage-limiting-and-detecting circuit and the charge voltage-limiting-and-detecting circuit at least includes a detection module, a clamp module, and an identification-and-voltage-limiting module.

The detection module is used to detect a drive signal output from the previous battery protection chip and generate a corresponding detection signal.

The clamp module is connected between a power supply end of the battery protection chip and an output end of the detection module for bi-directional voltage clamping based on the current flow direction of the detection signal, so that the voltage of a current inflow end is one clamp voltage higher than that of a current outflow end.

The identification-and-voltage-limiting module is connected to an output end of the clamp module for identifying the high or low level of the drive signal based on the magnitude of an output voltage of the clamp module and for reducing the level translation window voltage of the drive signal based on a reference voltage.

Optionally, each of the discharge voltage-limiting-and-detecting circuit and the charge voltage-limiting-and-detecting circuit further includes a bias voltage generation module and/or an anti-spike pulse module, where the bias voltage generation module is used to provide a bias voltage for the identification-and-voltage-limiting module; the anti-spike pulse module is connected to an output end of the identification-and-voltage-limiting module for filtering out spiking voltages.

Optionally, the detection module includes a current limiting resistor, a first end of the current limiting resistor receives the drive signal output from the previous battery protection chip, and a second end of the current limiting resistor is used as the output end of the detection module.

Optionally, the detection module further includes a short-circuit protection resistor, which is connected in series to the second end of the current limiting resistor.

Optionally, the clamp module includes a first diode and a second diode; a positive end of the first diode is connected to a negative end of the second diode and the power supply end of the chip, and a negative end of the first diode is connected to a positive end of the second diode and the output end of the detection module and serves as the output end of the clamp module.

Optionally, the clamp module includes at least one first PMOS transistor.

When the number of the first PMOS transistor is one, a gate of the first PMOS transistor is connected to its drain and the power supply end of the chip, and a source of the first PMOS transistor is connected to the output end of the detection module and serves as the output end of the clamp module.

When the number of the first PMOS transistor is no less than two, the gate of each first PMOS transistor is connected to its drain, the source of the previous first PMOS transistor is connected to the drain of the next first PMOS transistor, the drain of the first of these first PMOS transistors is connected to the power supply end of the chip, and the source of the last of these first PMOS transistors is connected to the output end of the detection module and serves as the output end of the clamp module.

Optionally, the identification-and-voltage-limiting module includes a second PMOS transistor, a first resistor, a first NMOS transistor, and a first current source. The bias voltage is applied to a gate of the second PMOS transistor, a source of the second PMOS transistor is connected to the output end of the clamp module, and a drain of the second PMOS transistor is connected to a drain of the first NMOS transistor through the first resistor. The reference voltage is applied to a gate of the first NMOS transistor, and a source of the first NMOS transistor is connected to a reference end of the chip through the first current source and serves as the output end of the identification-and-voltage-limiting module.

Optionally, the bias voltage generation module includes a third PMOS transistor, a second resistor, and a second current source. A gate of the third PMOS transistor is connected to its drain, a source of the third PMOS transistor is connected to the power supply end of the chip, and the drain of the third PMOS transistor is connected to a first end of the second resistor. A second end of the second resistor is connected to the reference end of the chip through the second current source and serves as an output end of the bias voltage generation module.

Optionally, the battery protection chip further includes a discharge logic circuit, a charge logic circuit, a discharge drive circuit, and a charge drive circuit.

The discharge logic circuit is connected to an output end of the discharge voltage-limiting-and-detecting circuit for generating a corresponding control logic according to discharge monitoring results of the battery protection chip when the discharge voltage-limiting-and-detecting circuit outputs a high level, and for generating an abnormal discharging control logic when the discharge voltage-limiting-and-detecting circuit outputs a low level.

The discharge drive circuit is connected to an output end of the discharge logic circuit for generating a corresponding drive signal according to the control logic output from the discharge logic circuit.

The charge logic circuit is connected to an output end of the charge voltage-limiting-and-detecting circuit for generating a corresponding control logic according to charge monitoring results of the battery protection chip when the charge voltage-limiting-and-detecting circuit outputs a high level, and for generating an abnormal charging control logic when the charge voltage-limiting-and-detecting circuit outputs a low level.

The charge drive circuit is connected to an output end of the charge logic circuit for generating a corresponding drive signal according to the control logic output from the charge logic circuit.

Optionally, the discharge drive circuit and the charge drive circuit have an open-drain structure or a push-pull structure.

The present disclosure further provides a battery system, including at least two battery packs and at least two battery protection chips described above. Each battery protection chip corresponds to one battery pack. The discharge drive signal output from the previous battery protection chip is transmitted to the discharge voltage-limiting-and-detecting circuit of the current battery protection chip; the charge drive signal output from the previous battery protection chip is transmitted to the charge voltage-limiting-and-detecting circuit of the current battery protection chip; the discharge drive signal output from the last battery protection chip controls a discharging MOS transistor, and the charge drive signal output from the last battery protection chip controls a charging MOS transistor.

The present disclosure further provides a method for protecting a battery by using a cascaded battery protection chip, including:

monitoring the voltage of each battery in a battery pack during a charge or discharge process by using a corresponding battery protection chip in the cascaded battery protection chip;

using a current battery protection chip to detect a drive signal output from a previous battery protection chip, identifying a high or low level of the drive signal output from the previous battery protection chip according to a current flow direction of a detection signal in the current battery protection chip, and reducing a level translation window voltage of the drive signal output from the previous battery protection chip; and

producing a drive signal for the current battery protection chip according to a reduced level translation window voltage and monitoring results.

As stated above, a battery protection chip, a battery system, and a battery protection method are provided in the present disclosure, which reduce the level translation window voltage of the discharge/charge drive signal output from the previous battery protection chip by the design of the discharge/charge voltage-limiting-and-detecting circuit, circuits, thus making them suitable for logic circuits including thin gate oxygen MOSFET devices, and reducing the cost of the chip. In addition, the present disclosure determines the level of the discharge/charge drive signal output from the previous battery protection chip through the current flow direction, which is related only to the current flow direction and not related to the magnitude of the voltage, therefore, it can work in a wide voltage range and avoid the problem of voltage dividing by a resistor. Moreover, the present disclosure controls the current through MOSFET, thus, decreasing the circuit area, reducing the current, and lowering the power consumption.

### BRIEF DESCRIPTION OF THE DRAWINGS

FIG. 1 shows a schematic circuit including one existing battery protection chip.
FIG. 2 shows a schematic circuit including existing cascaded battery protection chips.
FIG. 3 shows a schematic diagram of a cascaded transmission mode for a drive signal in the cascaded battery protection chips shown in FIG. 2.
FIG. 4 shows a schematic diagram of another cascaded transmission mode for the drive signal in the cascaded battery protection chips shown in FIG. 2.
FIG. 5 shows a schematic diagram of a discharge voltage-limiting-and-detecting circuit in a battery protection chip of the present disclosure.
FIG. 6 shows a schematic diagram of a charge voltage-limiting-and-detecting circuit in the battery protection chip of the present disclosure.
FIG. 7 shows a schematic diagram of a first kind of clamp module in the battery protection chip of the present disclosure.
FIG. 8 shows a schematic diagram of a second kind of clamp module in the battery protection chip of the present disclosure.
FIG. 9 shows a schematic diagram of a third kind of clamp module in the battery protection chip of the present disclosure.
FIG. 10 shows a waveform diagram of relevant signals in the battery protection chip of the present disclosure.

### Reference Numerals

- 10: Battery protection chip
- 11: Discharge voltage-limiting-and-detecting circuit
- 12: Charge voltage-limiting-and-detecting circuit
- 111,121: Detection module
- 112,122: Clamp module
- 113,123: Identification-and-voltage-limiting module
- 114,124: Bias voltage generation module
- 115,125: Anti-spike pulse module
- 13: Discharge logic circuit
- 14: Charge logic circuit
- 15: Discharge drive circuit
- 16: Charge drive circuit

### DETAILED DESCRIPTION OF THE EMBODIMENTS

The following illustrates the embodiments of the present disclosure by means of particular specific examples, and other advantages and efficacies of the present disclosure can be easily understood by those skilled in the art from the contents disclosed in this specification. The present disclosure may be implemented or applied in various other specific embodiments, and the details in this specification may be modified or altered based on different views and applications without departing from the spirit of the present disclosure.

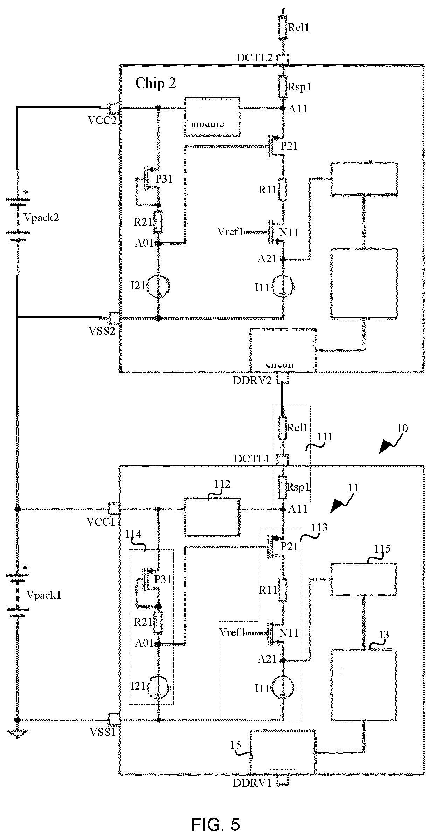

Please refer to FIGs. 5 to 10. It should be noted that the drawings provided in these embodiments are only schematic to illustrate the basic concept of the present disclosure. These drawings only show the components related to the present disclosure and are not drawn in accordance with the number, shape, and size of the components in actual implementation, the form, number, and proportion of the components in actual implementation may be changed arbitrarily, and the layout of the components may be more complex.

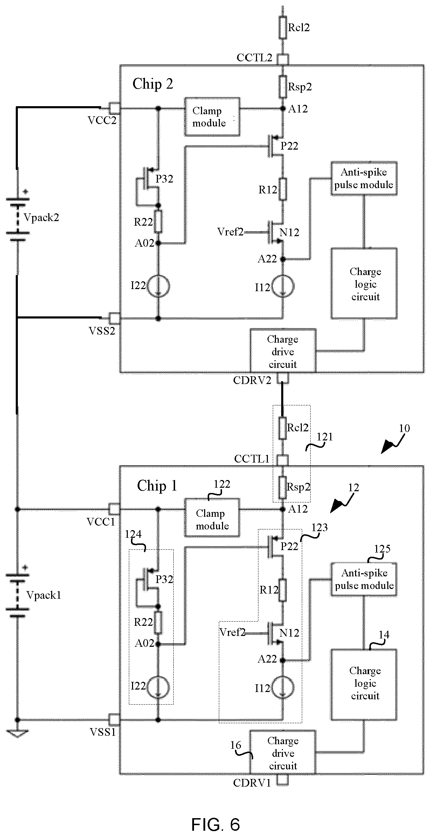

As shown in FIGs. 5 and 6, this embodiment provides a battery protection chip 10. The battery protection chip 10 at least includes a discharge voltage-limiting-and-detecting circuit 11 and a charge voltage-limiting-and-detecting circuit 12. The battery protection chip 10 further includes a discharge logic circuit 13, a charge logic circuit 14, a discharge drive circuit 15, and a charge drive circuit 16. It should be noted that the battery protection chip 10 described in this embodiment is applicable to the case of multiple chips in cascade, and it is also applicable to the case of a single chip.

As shown in FIG. 5, specifically, the discharge voltage-limiting-and-detecting circuit 11 at least includes a detection module 111, a clamp module 112, and an identification-and-voltage-limiting module 113. Further, the discharge voltage-limiting-and-detecting circuit 11 includes a bias voltage generation module 114 and/or an anti-spike pulse module 115. In an embodiment, the discharge voltage-limiting-and-detecting circuit 11 includes the detection module 111, the clamp module 112, the identification-and-voltage-limiting module 113, the bias voltage generation module 114, and the anti-spike pulse module 115.

The detection module 111 is used to detect a discharge drive signal from the previous level and generate a discharge detection signal.

In an embodiment, the detection module 111 includes a current limiting resistor Rcl1. A first end of the current limiting resistor Rcl1 receives the discharge drive signal from the previous level, and a second end of the current limiting resistor Rcl1 serves as an output end of the detection module 111 for outputting the discharge detection signal. The detection module 111 further includes a short-circuit protection resistor Rsp1, which is connected in series to the second end of the current limiting resistor Rcl1, for preventing the chip from being damaged by the overcurrent generated by the short-circuit of the current limiting resistor Rcl1. It should be noted that when the detection module 111 includes both the current limiting resistor Rcl1 and the short-circuit protection resistor Rsp1, a first end of the short-circuit protection resistor Rsp1 is connected to the second end of the current limiting resistor Rcl1, therefore, a second end of the short-circuit protection resistor Rsp1 serves as the output end of the detection module 111 and the second end of the current limiting resistor Rcl1 will no longer serve as the output end of the detection module 111. In practice, the current limiting resistor Rcl1 can be provided inside or outside the battery protection chip 10, which has no effect on this embodiment. In an embodiment, the current limiting resistor Rcl1 can be provided outside the battery protection chip 10 to facilitate the adjustment of resistance value.

The clamp module 112 is connected between the power supply terminal VCC of the battery protection chip and the output end of the detection module 111 for bi-directional voltage clamping based on the current flow direction of the discharge detection signal, so that the voltage of the current inflow end is one clamp voltage Vclamp higher than the voltage of the current outflow end.

In this embodiment, the magnitude of the current of the discharge detection signal is determined according to the high or low level of the discharge drive signal from the previous level. Specifically, if the discharge drive signal from the previous level is at a low level, the current of the discharge detection signal in the current battery protection chip is less than 111 or even 0; if the discharge drive signal from the previous level is at a high level, the current of the discharge detection signal in the current battery protection chip is greater than 111. Furthermore, the current flow direction in the clamp module 112 is determined according to the current magnitude of the discharge detection signal, so as to obtain a voltage value at the output end (i.e., at the node A11) that corresponds to the high or low level of the discharge drive signal from the previous level. Specifically, if the current of the discharge detection signal is less than 111 or even is 0, the current flow direction in the clamp module 112 is from VCC to A11, and the voltage at node A11 is clamped at VCC-Vclamp; if the current of the discharge detection signal is greater than I11, the current flow in the clamp module 112 is from A11 to VCC, and the voltage at node A11 is clamped at VCC+Vclamp.

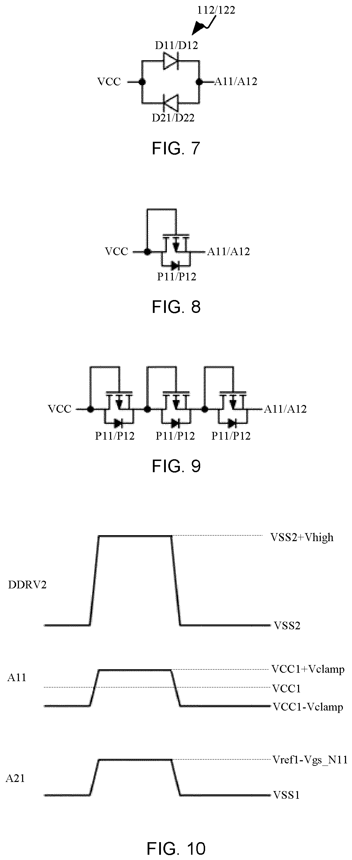

As an example, the clamp module 112 includes a first diode D11 and a second diode 21; a positive end of the first diode D11 is connected to a negative end of the second diode 21 and the power supply end VCC of the chip; a negative end of the first diode D11 is connected to a positive end of the second diode 21 and the output end of the detection module 111, and serves as an output end of the clamp module 112, as shown in FIG. 7. In this embodiment, only two diodes are utilized to achieve bi-directional voltage clamping, with the current inflow end having one diode forward voltage higher than the voltage at the current outflow end.

As another example, the clamp module 112 includes at least one first PMOS transistor P11. When the number of the first PMOS transistor P11 is one, a gate of the first PMOS transistor P11 is connected to its drain and the power supply end VCC of the chip, and a source of the first PMOS transistor P11 is connected to the output end of the detection module 111 and serves as the output end of the clamp module 112 (as shown in FIG. 8). When the number of the first PMOS transistor P11 is greater than or equal to two, the gate of each first PMOS transistor P11 is connected to its drain, and the source of a previous first PMOS transistor P11 is connected to the drain of a next first PMOS transistor P11. The drain of the first of these first PMOS transistors P11 is connected to the power supply end VCC of the chip, and the source of the last of these first PMOS transistors P11 is connected to the output end of the detection module 111 and serves as the output end of the clamp module 112 (as shown in FIG. 9). In this embodiment, when using PMOS transistors for bi-directional voltage clamping, the PMOS transistor in FIG. 8 can be a thick gate oxygen MOSFET device to obtain a high clamp voltage Vclamp, and the PMOS transistors in FIG. 9 can be thin gate oxygen MOSFET devices connected in series to obtain a high clamp voltage Vclamp. For example, to obtain a clamp voltage of 2V under low current conditions, three thin gate oxygen MOSFET devices may be connected in series; the voltage drop from VCC to A11 is the forward voltage of three parasitic diodes, which is about 2.1V; and the voltage drop from A11 to VCC is 3*Vth, which is also about 2.1V, where Vth is the turn-on threshold for the thin gate oxygen MOSFET device.

The identification-and-voltage-limiting module 113 is connected to the output end of the clamp module 112 for identifying a high or low level of the discharge drive signal of the previous level based on the magnitude of the output voltage of the clamp module 112 and for reducing the level translation window voltage of the discharge drive signal of the previous level based on a reference voltage Vref1.

As an example, the identification-and-voltage-limiting module 113 includes a second PMOS transistor P21, a first resistor R11, a first NMOS transistor N11, and a first current source I11. A bias voltage is applied to a gate of the second PMOS transistor P21, a source of the second PMOS transistor P21 is connected to the output end of the clamp module 112, and a drain of the second PMOS transistor P21 is connected to a drain of the first NMOS transistor N11 through the first resistor R11. The reference voltage Vref1 is applied to a gate of the first NMOS transistor N11, and a source of the first NMOS transistor N11 is connected to a reference end VSS of the chip through the first current source I11 and serves as the output end of the identification-and-voltage-limiting module 113. Optionally, the current in the first current source I11 is provided by a current mirror.

In this embodiment, when the voltage at node A11 is VCC-Vclamp, the second PMOS transistor P21 is turned off, the first current source I11 still tries to draw current and decreases the voltage at node A21 to 0V, i.e., the identification-and-voltage-limiting module 113 detects the low level of the previous discharge drive signal and also outputs a low level; when the voltage at node A11 is VCC+Vclamp, the second PMOS transistor P21 conducts, the first NMOS transistor N11 also conducts under the control of the reference voltage Vref1, and the voltage at node A21 rises to Vref1-Vth_N11, where Vth_N11 is a gate-source voltage of the first NMOS transistor N11 when its drain current is equal to I11, i.e., the identification-and-voltage-limiting module 113 detects the high level of the previous discharge drive signal and reduces this high level by using the reference voltage Vref1, thus reducing the level translation window voltage of the previous discharge drive signal to a level translation window voltage suitable for driving a thin gate oxygen MOSFET device, where the reference voltage Vref1=Vdda+Vth_N11, and Vdda is a high level suitable for driving the thin gate oxygen MOSFET.

The bias voltage generation module 114 is used to provide a bias voltage to the identification-and-voltage-limiting module 113 to turn off the second PMOS transistor P21 in the identification-and-voltage-limiting module 113 when the voltage at node A11 is VCC-Vclamp, and to turn on the second PMOS transistor P21 in the identification-and-voltage-limiting module 113 when the voltage at node A11 is VCC+Vclamp.

As an example, the bias voltage generation module 114 includes a third PMOS transistor P31, a second resistor R21, and a second current source I21. A gate of the third PMOS transistor P31 is connected to its drain, a source of the third PMOS transistor P31 is connected to the power supply end VCC of the chip, and the drain of the third PMOS transistor P31 is connected to a first end of the second resistor R21. A second end of the second resistor R21 is connected to the reference end VSS of the chip through the second current source I21 and serves as an output end of the bias voltage generation module 114 to output a bias voltage. Optionally, the current in the second current source I21 is provided by a current mirror.

In this embodiment, the current provided by the second current source I21 passes through the third PMOS transistor P31 and the second resistor R21, a voltage drop of |Vgs_P31|+I21*R21 at node A01 is generated and output as the bias voltage, where Vgs_P31 is a gate-source voltage of the third PMOS transistor P31 when its drain current is equal to I21, I21 is the current provided by the second current source, and R21 is the resistance value of the second resistor. Vgs_P31, I21, and R21 can be adjusted to allow this bias voltage to meet the requirements that when the voltage at node A11 is VCC-Vclamp, the second PMOS transistor P21 is turned off, and when the voltage at node A11 is VCC+Vclamp, the second PMOS transistor P21 is turned on.

The anti-spike pulse module 115 is connected to the output end of the identification-and-voltage-limiting module 113 for filtering out spiking voltages and preventing false triggering.

As an example, the anti-spike pulse module 115 includes a capacitor and a delay circuit; the capacitor has a filtering and stabilizing effect, and, in combination with the delay circuit, can prevent the spiking voltages from causing false triggering. It should be noted that any of the existing circuits including the capacitor and delay circuit, which has the function of filtering out the spiking voltages, is suitable for this embodiment.

The discharge voltage-limiting-and-detecting circuit 11 may further include a discharge logic circuit 13 connected to an output end of the discharge voltage-limiting-and-detecting circuit 11. The discharge logic circuit 13 generates a corresponding control logic according to the discharge monitoring results of the battery protection chip 10 when the discharge voltage-limiting-and-detecting circuit 11 outputs a high level, and generates an abnormal discharging control logic when the discharge voltage-limiting-and-detecting circuit 11 outputs a low level.

In this embodiment, when the discharge voltage-limiting-and-detecting circuit 11 outputs a high level, that is, the discharge drive signal output from the previous battery protection chip is at a high level, that is, the previous level battery protection chip determines that the discharge is in a normal state, at this time, the discharge logic circuit 13 generates the corresponding control logic based on the monitoring results of the current battery protection chip. For example, if the current battery protection chip 10 detects the discharge is in an abnormal state, the discharge logic circuit 13 generates the abnormal discharging control logic, and vice versa, generates the normal discharging control logic. When the discharge voltage-limiting-and-detecting circuit 11 outputs a low level, that is, the discharge drive signal output from the previous battery protection chip is at a low level, that is, the previous level battery protection chip determines that the discharge is in an abnormal state, at this time, the discharge logic circuit 13 generates the abnormal discharging control logic directly.

The discharge voltage-limiting-and-detecting circuit 11 may further include a discharge drive circuit 15 connected to the output end of the discharge logic circuit 13. The discharge drive circuit 15 generates a corresponding drive signal for the current battery protection chip according to the control logic output from the discharge logic circuit 13.

In this embodiment, when the discharge logic circuit 13 generates the control logic for abnormal discharge, the discharge drive circuit 15 generates a discharge drive signal at a low level for the current battery protection chip to turn off the discharging MOS transistors. When the discharge logic circuit 13 generates the control logic for normal discharge, the discharge drive circuit 15 generates a discharge drive signal at a high level for the current battery protection chip to turn on the discharging MOS transistors.

As an example, the discharge drive circuit 15 has an open-drain structure or a push-pull structure. For the open-drain structure, when the chip undergoes abnormal discharge protection, no current flows out of the circuit. When the chip is working normally, a large current flows out of the circuit. For the push-pull structure, when the chip undergoes abnormal discharge protection, a small current flows out of the circuit. When the chip is working normally, a large current flows out of the circuit. The small current refers to a current less than I11, and the large current refers to a current greater than I11. It should be noted that the open-drain structure and the push-pull structure are both well-known structures in the field, so the two structures will not be repeated here.

As can be seen from the above, the discharge voltage-limiting-and-detecting circuit 11 is used to detect the discharge drive signal output from the previous battery protection chip, to identify the high or low level of the discharge drive signal output from the previous battery protection chip according to the current flow direction of the obtained discharge detection signal, and to reduce the level translation window voltage of the discharge drive signal output from the previous battery protection chip, so that the reduced level of the signal is suitable for driving the thin gate oxygen MOSFET device, which is advantageous for reducing the cost of the chip. The discharge voltage-limiting-and-detecting circuit 11 described in this embodiment determines the high or low level of the discharge drive signal output from the previous battery protection chip through the current flow direction of the obtained discharge detection signal, which is related only to the current flow direction and not related to the magnitude of the voltage, thus bypassing the problem of voltage dividing by a resistor and consuming less power.

As shown in FIG. 6, specifically, the charge voltage-limiting-and-detecting circuit 12 at least includes a detection module 121, a clamp module 122, and an identification-and-voltage-limiting module 123. Further, the charge voltage-limiting-and-detecting circuit 12 includes a bias voltage generation module 124 and/or an anti-spike pulse module 125. In an embodiment, the charge voltage-limiting-and-detecting circuit 12 includes the detection module 121, the clamp module 122, the identification-and-voltage-limiting module 123, the bias voltage generation module 124, and the anti-spike pulse module 125.

The detection module 121 is used to detect a charge drive signal from the previous level and generate a charge detection signal.

In an embodiment, the detection module 121 includes a current limiting resistor Rcl2, where a first end of the current limiting resistor Rcl2 receives the charge drive signal from the previous level, and a second end of the current limiting resistor Rcl2 serves as an output end of the detection module 121 for outputting the charge detection signal. The detection module 121 further includes a short-circuit protection resistor Rsp2 connected in series to the second end of the current limiting resistor Rcl2, for preventing the chip from being damaged by the overcurrent generated by the short-circuit of the current limiting resistor Rcl2. It should be noted that when the detection module 121 includes both the current limiting resistor Rcl2 and the short-circuit protection resistor Rsp2, a first end of the short-circuit protection resistor Rsp2 is connected to the second end of the current limiting resistor Rcl2, therefore, a second end of the short-circuit protection resistor Rsp2 serves as the output end of the detection module 121 and the second end of the current limiting resistor Rcl2 will no longer serve as the output end of the detection module 121. In practice, the current limiting resistor Rcl2 can be provided inside or outside the battery protection chip 10, which has no effect on this embodiment. In an embodiment, the current limiting resistor Rcl2 can be provided outside the battery protection chip 10 to facilitate the adjustment of resistance value.

The clamp module 122 is connected between the power supply end VCC of the battery protection chip and the output end of the detection module 121 for bi-directional voltage clamping based on the current flow direction of the charge detection signal, so that the voltage of the current inflow end is one clamp voltage Vclamp higher than the voltage of the current outflow end.

In this embodiment, the magnitude of the current of the charge detection signal is determined according to the high or low level of the charge drive signal from the previous level. Specifically, if the charge drive signal from the previous level is at a low level, the current of the charge detection signal in the current battery protection chip is less than I12 or even is 0; if the charge drive signal from the previous level is at a high level, the current of the charge detection signal in the current battery protection chip is greater than I12. Furthermore, the current flow direction in the clamp module 122 is determined according to the current magnitude of the discharge detection signal, so as to obtain a voltage value at the output end (i.e., at the node A12) that corresponds to the high or low level of the charge drive signal from the previous level. Specifically, if the current of the charge detection signal is less than I12 or even is 0, the current flow direction in the clamp module 122 is from VCC to A12, and the voltage at node A12 is clamped at VCC-Vclamp; if the current of the charge detection signal is greater than I12, the current flow in the clamp module 122 is from A12 to VCC, and the voltage at node A12 is clamped at VCC+Vclamp.

As an example, the clamp module 122 includes a first diode D12 and a second diode 22; a positive end of the first diode D12 is connected to a negative end of the second diode 22 and the power supply end VCC of the chip; a negative end of the first diode D12 is connected to a positive end of the second diode 22 and the output end of the detection module 121, and serves as an output end of the clamp module 122, as shown in FIG. 7. In this embodiment, only two diodes are utilized to achieve bi-directional voltage clamping, with the current inflow end having one diode forward voltage higher than the voltage at the current outflow end.

As another example, the clamp module 122 includes at least one first PMOS transistor P12. When the number of the first PMOS transistor P12 is one, a gate of the first PMOS transistor P12 is connected to its drain and the power supply end VCC of the chip, and a source of the first PMOS transistor P12 is connected to the output end of the detection module 121 and serves as the output end of the clamp module 122 (as shown in FIG. 8). When the number of the first PMOS transistor P12 is greater than or equal to two, the gate of each first PMOS transistor P12 is connected to its corresponding drain, and the source of a previous first PMOS transistor P12 is connected to a drain of the next first PMOS transistor P12. The drain of the first of these first PMOS transistors P12 is connected to the power supply end VCC of the chip, and the source of the last of these first PMOS transistors P12 is connected to the output end of the detection module 121 and serves as the output end of the clamp module 122 (as shown in FIG. 9). In this embodiment, when using PMOS transistors for bi-directional voltage clamping, the PMOS transistor in FIG. 8 can be a thick gate oxygen MOSFET device to obtain a high clamp voltage Vclamp, and the PMOS transistors in FIG. 9 can be thin gate oxygen MOSFET devices connected in series to obtain a high clamp voltage Vclamp. For example, to obtain a clamp voltage of 2V under low current conditions, three thin gate oxygen MOSFET devices may be connected in series; the voltage drop from VCC to A12 is the forward voltage of three parasitic diodes, which is about 2.1V; the voltage drop from A12 to VCC is 3*Vth, which is also about 2.1V, where Vth is the turn-on threshold for the thin gate oxygen MOSFET device.

The identification-and-voltage-limiting module 123 is connected to the output end of the clamp module 122 for identifying a high or low level of the charge drive signal of the previous level based on the magnitude of the output voltage of the clamp module 122 and for reducing the level translation window voltage of the charge drive signal of the previous level based on a reference voltage Vref2.

As an example, the identification-and-voltage-limiting module 123 includes a second PMOS transistor P22, a first resistor R12, a first NMOS transistor N12, and a first current source I12. A bias voltage is applied to a gate of the second PMOS transistor P22, a source of the second PMOS transistor P22 is connected to the output end of the clamp module 122, and a drain of the second PMOS transistor P22 is connected to a drain of the first NMOS transistor N12 through the first resistor R12. The reference voltage Vref2 is applied to a gate of the first NMOS transistor N12, and a source of the first NMOS transistor N12 is connected to a reference end VSS of the chip through the first current source I12 and serves as the output end of the identification-and-voltage-limiting module 123. Optionally, the current in the first current source I12 is provided by a current mirror.

In this embodiment, when the voltage at node A12 is VCC-Vclamp, the second PMOS transistor P22 is turned off, the first current source I12 still tries to draw current and decreases the voltage at node A22 to 0V, i.e., the identification-and-voltage-limiting module 123 detects the low level of the previous charge drive signal and also outputs a low level; when the voltage at node A12 is VCC+Vclamp, the second PMOS transistor P22 conducts, the first NMOS transistor N12 also conducts under the control of the reference voltage Vref2, and the voltage at node A22 rises to Vref2-Vth_N12, where Vth_N12 is a gate-source voltage of the first NMOS transistor N12 when its drain current is equal to I12, i.e., the identification-and-voltage-limiting module 123 detects the high level of the previous charge drive signal and reduces this high level by using the reference voltage Vref2, thus reducing the level translation window voltage of the previous charge drive signal to a level translation window voltage suitable for driving a thin gate oxygen MOSFET device, where the reference voltage Vref2=Vdda+Vth_N12, and Vdda is a high level suitable for driving the thin gate oxygen MOSFET.

The bias voltage generation module 124 is used to provide a bias voltage to the identification-and-voltage-limiting module 123 to turn off the second PMOS transistor P22 in the identification-and-voltage-limiting module 123 when the voltage at node A12 is VCC-Vclamp, and to turn on the second PMOS transistor P22 in the identification-and-voltage-limiting module 123 when the voltage at node A12 is VCC+Vclamp.

As an example, the bias voltage generation module 124 includes a third PMOS transistor P32, a second resistor R22, and a second current source I22. A gate of the third PMOS transistor P32 is connected to its drain, a source of the third PMOS transistor P32 is connected to the power supply end VCC of the chip, and the drain of the third PMOS transistor P32 is connected to a first end of the second resistor R22. A second end of the second resistor R22 is connected to the reference end VSS of the chip through the second current source I22 and serves as an output end of the bias voltage generation module 124 to output a bias voltage. Optionally, the current in the second current source I22 is provided by a current mirror.

In this embodiment, the current provided by the second current source I22 passes through the third PMOS transistor P32 and the second resistor R22, a voltage drop of |Vgs_P32|+I22*R22 at node A02 is generated and output as the bias voltage, where Vgs_P32 is a gate-source voltage of the third PMOS transistor P32 when its drain current is equal to I22, I22 is the current provided by the second current source, R22 is the resistance value of the second resistor. Vgs_P32, I22, and R22 can be adjusted to allow this bias voltage to meet the requirements that when the voltage at node A12 is VCC-Vclamp, the second PMOS transistor P22 is turned off, and when the voltage at node A12 is VCC+Vclamp, the second PMOS transistor P22 is turned on.

The anti-spike pulse module 125 is connected to the output end of the identification-and-voltage-limiting module 123 for filtering out spiking voltages and preventing false triggering.

As an example, the anti-spike pulse module 125 includes a capacitor and a delay circuit; the capacitor has a filtering and stabilizing effect, and, in combination with the delay circuit, can prevent the spiking voltages from causing false triggering. It should be noted that any of the existing circuits including a capacitor and a delay circuit, with the function of filtering out spiking voltages, is suitable for this embodiment.

The charge voltage-limiting-and-detecting circuit 12 may further include a charge logic circuit 14 connected to an output end of the charge voltage-limiting-and-detecting circuit 12. The charge logic circuit 14 generates a corresponding control logic according to the charge monitoring results of the battery protection chip 10 when the charge voltage-limiting-and-detecting circuit 12 outputs a high level, and generates an abnormal charging control logic when the charge voltage-limiting-and-detecting circuit 12 outputs a low level.

In this embodiment, when the charge voltage-limiting-and-detecting circuit 12 outputs a high level, that is, the charge drive signal output from the previous battery protection chip is a high level, that is, the previous level battery protection chip determines that the charge is in a normal state, at this time, the charge logic circuit 14 generates the corresponding control logic based on the monitoring results of the current battery protection chip. For example, if the current battery protection chip 10 detects the charge is in an abnormal state, the charge logic circuit 14 generates the abnormal charging control logic, and vice versa, generates the normal charging control logic. When the charge voltage-limiting-and-detecting circuit 12 outputs a low level, that is, the charge drive signal output from the previous battery protection chip is a low level, that is, the previous level battery protection chip determines that the charge is in an abnormal state, at this time, the charge logic circuit 14 generates the abnormal charging control logic directly.

The charge voltage-limiting-and-detecting circuit 12 may further include a charge drive circuit 16 connected to the output end of the charge logic circuit 14. The charge drive circuit 16 generates a corresponding drive signal for the current battery protection chip according to the control logic output from the charge logic circuit 14.

In this embodiment, when the charge logic circuit 14 generates the control logic for the abnormal charge, the charge drive circuit 16 generates a charge drive signal at a low level for the current battery protection chip to turn off the charging MOS transistors. When the charge logic circuit 14 generates the control logic for the normal charge, the charge drive circuit 16 generates a charge drive signal at a high level for the current battery protection chip to turn on the charging MOS transistors.

As an example, the charge drive circuit 16 has an open-drain structure or a push-pull structure. For the open-drain structure, when the chip undergoes abnormal discharge protection, no current flows out of the circuit; when the chip is working normally, a large current flows out of the circuit. For the push-pull structure, when the chip undergoes abnormal discharge protection, a small current flows out of the circuit; when the chip is working normally, a large current flows out of the circuit. The small current refers to a current less than I12, and the large current refers to a current greater than I12. It should be noted that the open-drain structure and the push-pull structure are both well-known structures in the field, so the two structures will not be repeated here.

As can be seen from the above, the charge voltage-limiting-and-detecting circuit 12 is used to detect the charge drive signal output from the previous battery protection chip, to identify the high or low level of the charge drive signal output from the previous battery protection chip according to the current flow direction of the obtained charge detection signal, and to reduce the level translation window voltage of the charge drive signal output from the previous battery protection chip, so that the reduced level of the signal is suitable for driving the thin gate oxygen MOSFET device, which is advantageous for reducing the cost of the chip. The charge voltage-limiting-and-detecting circuit 12 described in this embodiment determines the high or low level of the charge drive signal output from the previous battery protection chip through the current flow direction of the obtained charge detection signal, which is related only to the current flow direction and not related to the magnitude of the voltage, thus bypassing the problem of voltage dividing by a resistor and consuming less power.

This embodiment also provides a battery system. The battery system includes at least two battery packs and at least two battery protection chips 10 as described above. Each battery protection chip 10 corresponds to one battery pack. The discharge drive signal output from the previous level battery protection chip is transmitted to the discharge voltage-limiting-and-detecting circuit 11 of the current level battery protection chip, the charge drive signal output from the previous level battery protection chip is transmitted to the charge voltage-limiting-and-detecting circuit 12 of the current level battery protection chip, the discharge drive signal output from the last level battery protection chip controls the discharging MOS transistor, and the charge drive signal output from the last level battery protection chip controls the charging MOS transistor.

The operating principle of the battery system in this embodiment is illustrated by the cascaded structure shown in FIGs. 5 and 6, and since the principles of the discharging process and the charging process are the same, only the discharging process is used as an example for illustration herein.

As shown in FIG. 5, two battery packs are connected in cascade, two battery protection chips are connected in cascade, and each battery protection chip is correspondingly connected to one battery pack. The voltages of two battery packs (i.e., Vpack1 and Vpack2) are both in the range of 18V-40V, and the potential at the power supply end VCC1 of the battery protection chip 1 is identical to that at the reference end VSS2 of the battery protection chip 2. For the battery protection chip 2, the low potential of the discharge drive signal output from the discharge drive circuit is VSS2, and the high potential is VSS2+Vhigh, where Vhigh≈Vpack2. The difference between the high and low potentials of the discharge drive signal can be as high as 40V, which is much larger than the operating range of the thin gate oxygen MOSFET device (generally around 5V).

If the discharge drive circuit adopts the open-drain structure:

when a discharge abnormality occurs in the battery protection chip 2, the current source of the discharge drive circuit is turned off, therefore, no current is output from the battery protection chip 2. The current I11 in the battery protection chip 1 can only flow from VCC1, i.e., the current I11 flows from left side to right side of the clamp module 112, so that the potential at node A11 is VCC1-Vclamp, the second PMOS transistor P21 is turned off, the first current source I11 still tries to draw current and reduces the voltage at node A21 to 0V (as shown in FIG. 10). At this time, the discharge logic circuit 13 directly generates the control logic for discharge abnormality, and the discharge drive circuit 15 generates a discharge drive signal at a low level to turn off the discharging MOS transistor, thus realizing the discharge abnormality protection.

When the discharge in the battery protection chip 2 is in the normal state, the discharge drive circuit of the battery protection chip 2 outputs a current greater than I11, therefore, a current flows from the right side to the left side of the clamp module 112 in the chip 1, the potential at node A11 is VCC1+Vclamp, the second PMOS transistor P21 conducts, and the voltage at node A21 rises to Vref1-Vth_N11, i.e. Vdda, by using the first NMOS transistor N11 (as shown in FIG. 10). At this point, the discharge logic circuit 13 generates the corresponding control logic according to the monitoring results of the battery protection chip 1, and the discharge drive circuit 15 generates the corresponding discharge drive signal according to the control logic of the discharge logic circuit 13, so as to control on or off state of the discharging MOS transistors.

If the discharge drive circuit adopts the push-pull structure:

when a discharge abnormality occurs in the battery protection chip 2, a current less than I11 is output from the discharge drive circuit of the battery protection chip 2, and then a current flows from left side to right side of the clamp module 112 in the chip 1, so the potential at node A11 is VCC1-Vclamp, the second PMOS transistor P21 is turned off, and the first current source I11 still tries to draw current and reduce the voltage at node A21 to 0V (as shown in FIG. 10). At this time, the discharge logic circuit 13 directly generates the control logic for discharge abnormality, and the discharge drive circuit 15 generates a discharge drive signal at a low level to turn off the discharging MOS transistor, thus realizing the discharge abnormality protection.

When the discharge in the battery protection chip 2 is in the normal state, the discharge drive circuit of the battery protection chip 2 outputs a current greater than I11, therefore, a current flows from the right side to the left side of the clamp module 112 in the chip 1, the potential at node A11 is VCC1+Vclamp, the second PMOS transistor P21 conducts, and the voltage at node A21 rises to Vref1-Vth_N11, i.e. Vdda, by using the first NMOS transistor N11 (as shown in FIG. 10). At this point, the discharge logic circuit 13 generates the corresponding control logic according to the monitoring results of the battery protection chip 1, and the discharge drive circuit 15 generates the corresponding discharge drive signal according to the control logic of the discharge logic circuit 13, so as to control on or off state of the discharging MOS transistors.

This embodiment also provides a method for protecting a battery by using a cascaded battery protection chip, including the following.

1) Monitoring the voltage of each battery in a battery pack during a charge or discharge process by using a corresponding battery protection chip. It should be noted that the use of a battery protection chip to monitor the battery voltage is a well-known technique in the field, and therefore, will not be repeated herein.

2) The current discharge voltage-limiting-and-detecting circuit is used to detect the drive signal output from the previous battery protection chip, to identify the high or low level of the drive signal output from the previous battery protection chip according to the current flow direction of the obtained detection signal, and to reduce the level translation window voltage of the drive signal output from the previous battery protection chip to make the obtained translation window voltage suitable for driving the thin gate oxygen MOSFET device.

Specifically, the method can be implemented using the circuits shown in FIGs. 5 and 6. When the discharge/charge drive signal output from the previous battery protection chip is at a low level, the current of the obtained discharge/charge detection signal in the current battery protection chip is less than I11/I12, therefore, a current flows from left side to right side of the clamp module 112/122 in the current battery protection chip, then the voltage at node A11/A12 is VCC-Vclamp, the second PMOS transistor P21/P22 is turned off, and the first current source 111/112 tries to draw current and reduces the voltage at the node A21/A22 to 0V; when the discharge/charge drive signal output from the previous battery protection chip is at a high level, the current of the obtained discharge/charge detection signal in the current battery protection chip is higher than I11/I12, therefore, a current flows from right side to left side of the clamp module 112/122 in the current battery protection chip, then the voltage at node A11/A12 is VCC+Vclamp, the second PMOS transistor P21/P22 conducts, and the voltage at node A21/A22 rises to Vref1-Vth_N11, i.e., Vdda, by using the first NMOS transistor N11/N12.

3) The current battery protection chip generates a drive signal according to the level of the reduced signal and the monitoring results.

Specifically, when the reduced signal is at a low level, indicating that the previous battery protection chip discharges/charges abnormally, the current battery protection chip directly generates the drive signal at a low level to turn off the discharging/charging MOS transistor, thus realizing discharging/charging abnormality protection; when the reduced signal is at a high level, indicating that the previous battery protection chip discharges/charges normally, the current battery protection chip generates the drive signal according to its monitoring results. For example, when the monitoring results show that a discharging/charging abnormality occurs, the current battery protection chip generates the drive signal at a low level to turn off the discharging/charging MOS transistor, thus realizing the discharging/charging abnormality protection; conversely, it generates the drive signal at a high level to turn on the discharge/charge MOS transistor.

In summary, a battery protection chip, a battery system, and a battery protection method are provided in the present disclosure, which reduce the level translation window voltage of the discharge/charge drive signal output from the previous battery protection chip by the design of the discharge/charge voltage-limiting-and-detecting, thus making them suitable for logic circuits including thin gate oxygen MOSFET devices, and reducing the cost of the chip. In addition, the present disclosure determines the level of the discharge/charge drive signal output from the previous battery protection chip through the current flow direction, which is related only to the current flow direction and not related to the magnitude of the voltage, therefore, it can work in a wide voltage range and avoid the problem of voltage dividing by a resistor. Moreover, the present disclosure controls the current through MOSFET, thus, decreasing the circuit area, reducing the current, and lowering the power consumption. Therefore, the present disclosure effectively overcomes various shortcomings of the prior art and has a high industrial utilization value.

The above embodiments are only exemplary to illustrate the principle of the present disclosure and its effectiveness, and are not intended to limit the present disclosure. Any person familiar with the art may modify or change the above embodiments without violating the spirit and scope of the present disclosure. Therefore, all equivalent modifications or changes made by persons having ordinary knowledge of the art without departing from the spirit and technical ideas disclosed in the present disclosure shall still be covered by the claims of the present disclosure.

## Claims

1. A battery protection chip, at least comprising:
a discharge voltage-limiting-and-detecting circuit, used to detect a discharge drive signal output from a previous battery protection chip, to identify a high or low level of the discharge drive signal output from the previous battery protection chip according to a current flow direction of a discharge detection signal in a current battery protection chip, and to reduce a level translation window voltage of the discharge drive signal output from the previous battery protection chip; and
a charge voltage-limiting-and-detecting circuit, used to detect a charge drive signal output from the previous battery protection chip, to identify a high or low level of the charge drive signal output from the previous battery protection chip according to a current flow direction of a charge detection signal in the current battery protection chip, and to reduce a level translation window voltage of the charge drive signal output from the previous battery protection chip.

2. The battery protection chip according to claim 1, wherein each of the discharge voltage-limiting-and-detecting circuit and the charge voltage-limiting-and-detecting circuit at least comprises:
a detection module, used to detect a drive signal output from the previous battery protection chip and to generate a corresponding detection signal;
a clamp module, connected between a power supply end of the battery protection chip and an output end of the detection module for bi-directional voltage clamping based on the current flow direction of the detection signal, so that a voltage of a current inflow end is one clamp voltage higher than that of a current outflow end; and
an identification-and-voltage-limiting module, connected to an output end of the clamp module for identifying the high or low level of the drive signal based on the magnitude of an output voltage of the clamp module and for reducing the level translation window voltage of the drive signal based on a reference voltage.

3. The battery protection chip according to claim 2, wherein each of the discharge voltage-limiting-and-detecting circuit and the charge voltage-limiting-and-detecting circuit further comprises:
a bias voltage generation module, used to provide a bias voltage for the identification-and-voltage-limiting module; and
an anti-spike pulse module, connected to an output end of the identification-and-voltage-limiting module for filtering out spiking voltages.

4. The battery protection chip according to claim 2 or 3, wherein the detection module comprises a current limiting resistor,
wherein a first end of the current limiting resistor receives the drive signal output from the previous battery protection chip, and a second end of the current limiting resistor is used as the output end of the detection module.

5. The battery protection chip according to claim 4, wherein the detection module further comprises a short-circuit protection resistor, which is connected in series to the second end of the current limiting resistor.

6. The battery protection chip according to claim 2 or 3, wherein the clamp module comprises a first diode and a second diode;
wherein a positive end of the first diode is connected to a negative end of the second diode and the power supply end of the chip, and a negative end of the first diode is connected to a positive end of the second diode and the output end of the detection module and serves as the output end of the clamp module.

7. The battery protection chip according to claim 2 or 3, wherein the clamp module comprises at least one first PMOS transistor,
wherein when the number of the first PMOS transistor is one, a gate of the first PMOS transistor is connected to its drain and the power supply end of the chip, and a source of the first PMOS transistor is connected to the output end of the detection module and serves as the output end of the clamp module;
wherein when the number of the first PMOS transistor is no less than two, a gate of each first PMOS transistor is connected to its drain, a source of a previous first PMOS transistor is connected to a drain of a next first PMOS transistor, a drain of the first of these first PMOS transistors is connected to the power supply end of the chip, and a source of the last of these first PMOS transistors is connected to the output end of the detection module and serves as the output end of the clamp module.

8. The battery protection chip according to claim 2 or 3, wherein the identification-and-voltage-limiting module comprises a second PMOS transistor, a first resistor, a first NMOS transistor, and a first current source,
the bias voltage is applied to a gate of the second PMOS transistor, a source of the second PMOS transistor is connected to the output end of the clamp module, and a drain of the second PMOS transistor is connected to a drain of the first NMOS transistor through the first resistor;
the reference voltage is applied to a gate of the first NMOS transistor, and a source of the first NMOS transistor is connected to a reference end of the chip through the first current source and serves as the output end of the identification-and-voltage-limiting module.

9. The battery protection chip according to claim 3, wherein the bias voltage generation module comprises a third PMOS transistor, a second resistor, and a second current source,
wherein a gate of the third PMOS transistor is connected to its drain, a source of the third PMOS transistor is connected to the power supply end of the chip, and the drain of the third PMOS transistor is connected to a first end of the second resistor; a second end of the second resistor is connected to the reference end of the chip through the second current source and serves as an output end of the bias voltage generation module.

10. The battery protection chip according to claim 1, further comprising:
a discharge logic circuit, connected to an output end of the discharge voltage-limiting-and-detecting circuit for generating a corresponding control logic according to discharge monitoring results of the battery protection chip when the discharge voltage-limiting-and-detecting circuit outputs a high level, and for generating an abnormal discharging control logic when the discharge voltage-limiting-and-detecting circuit outputs a low level;
a discharge drive circuit, connected to an output end of the discharge logic circuit for generating a corresponding drive signal according to the control logic output from the discharge logic circuit;
a charge logic circuit, connected to an output end of the charge voltage-limiting-and-detecting circuit for generating a corresponding control logic according to charge monitoring results of the battery protection chip when the charge voltage-limiting-and-detecting circuit outputs a high level, and for generating an abnormal charging control logic when the charge voltage-limiting-and-detecting circuit outputs a low level; and
a charge drive circuit, connected to an output end of the charge logic circuit for generating a corresponding drive signal according to the control logic output from the charge logic circuit.

11. The battery protection chip according to claim 10, wherein the discharge drive circuit and the charge drive circuit have an open-drain structure or a push-pull structure.

12. A battery system, comprising at least two battery packs and at least two battery protection chips according to any one of claims 1-11,
wherein each battery protection chip corresponds to one battery pack;
wherein the discharge drive signal output from the previous battery protection chip is transmitted to the discharge voltage-limiting-and-detecting circuit of the current battery protection chip; the charge drive signal output from the previous battery protection chip is transmitted to the charge voltage-limiting-and-detecting circuit of the current battery protection chip; the discharge drive signal output from the last battery protection chip controls a discharging MOS transistor, and the charge drive signal output from the last battery protection chip controls a charging MOS transistor.

13. A method for protecting a battery by using cascaded battery protection chips, comprising:
monitoring a voltage of each battery in a battery pack during a charge or discharge process by using a corresponding battery protection chip in the cascaded battery protection chips;
using a current battery protection chip to detect a drive signal output from a previous battery protection chip, identifying a high or low level of the drive signal output from the previous battery protection chip according to a current flow direction of a detection signal in the current battery protection chip, and reducing a level translation window voltage of the drive signal output from the previous battery protection chip; and
producing a drive signal for the current battery protection chip according to a reduced level translation window voltage and monitoring results.

14. The method according to claim 13, comprising:
when the drive signal output from the previous battery protection chip is at a low level, a current of the detection signal of the current battery chip flows out from a power supply of the chip;
when the drive signal output from the previous battery protection chip is at a high level, the current of the detection signal of the current battery chip flows to the power supply of the chip.

15. The method according to claim 13, comprising:
reducing the level translation window voltage of the drive signal output from the previous battery protection chip by using a reference voltage.
